# EUROPÄISCHE PATENTSCHRIFT

(11) **EP 1 137 612 B1**
(45) Veröffentlichungstag und Bekanntmachung des Hinweises auf die Patenterteilung: **18.12.2002**
(21) Anmeldenummer: 99948886.9
(22) Anmeldetag: 28.09.1999
(51) Int. Cl.: C04B 35/18, F27D 3/02

(54) **HOCHTEMPERATURFESTER, HOCHBELASTBARER, FEINKERAMISCHER, GESINTERTER KONSTRUKTIONSWERKSTOFF, VERFAHREN ZU SEINER HERSTELLUNG UND EIN BAUTEIL AUS EINEM KERAMIKWERKSTOFF**
HIGH-TEMPERATURE RESISTANT, HIGH-STRESS, FINE CERAMIC, SINTERED CONSTRUCTION MATERIAL, METHOD FOR THE PRODUCTION THEREOF AND COMPONENT MADE OF A CERAMIC MATERIAL
MATERIAU DE CONSTRUCTION EN CERAMIQUE FINE FRITTEE, RESISTANT AU HAUTES TEMPERATURES ET A HAUTE CAPACITE DE CHARGE, SON PROCEDE DE PRODUCTION ET COMPOSANT REALISE DANS CE MATERIAU CERAMIQUE

(30) Priorität: 05.10.1998 DE 19845761
(43) Veröffentlichungstag der Anmeldung: 04.10.2001
(73) Patentinhaber: THE MORGAN CRUCIBLE COMPANY PLC, Windsor, Berkshire SL4 1EP (GB)
(72) Erfinder: BETTGES, Heinrich, D-84539 Zangberg (DE); HAHN, Christoph, D-84549 Engelsberg (DE); KNAPE, Bernd, D-84478 Waldkraiburg (DE); SONNTAG, Andreas, D-83564 Soyen (DE); SÜSSMUTH, Godehard, D-84453 Mühldorf (DE)
(74) Vertreter: Pfenning, Meinig & Partner
(86) Internationale Anmeldenummer: EP9907195
(87) Internationale Veröffentlichungsnummer: WO00020351

(56) Entgegenhaltungen:
- EP-A- 0 005 198
- DE-A- 4 039 530
- KUBOTA Y ET AL: "CHANGES OF MICROSTRUCTURE AND HIGH-TEMPERATURE STRENGTH OF CERAMIC COMPOSITE IN THE MULLITE-ZRO2-AL2O3 SYSTEM USING AN IN-SITU REACTION BETWEEN SYNTHETIC ZIRCON AND AL2O3" JOURNAL OF THE CERAMIC SOCIETY OF JAPAN, INTERNATIONAL EDITION,JP,FUJI TECHNOLOGY PRESS, TOKYO, Bd. 102, Nr. 1, Seite 94-99 XP000474412 ISSN: 0912-9200
- PATENT ABSTRACTS OF JAPAN vol. 1998, no. 13, 30. November 1998 (1998-11-30) & JP 10 212158 A (TOSHIBA CERAMICS CO LTD), 11. August 1998 (1998-08-11)
- MARPLE B R ET AL: "MULLITE/ALUMINA PARTICULATE COMPOSITES BY INFILTRATION PROCESSING: IV, RESIDUAL STRESS PROFILES" JOURNAL OF THE AMERICAN CERAMIC SOCIETY,US,AMERICAN CERAMIC SOCIETY. COLUMBUS, Bd. 75, Nr. 1, Seite 44-51 XP000249658 ISSN: 0002-7820

## Beschreibung

Die Erfindung betrifft einen hochtemperaturfesten Keramikwerkstoff, aus Werkstoff hergestellte Bauteile und Verfahren zur Herstellung. Dabei ist unter hochtemperaturfest eine Beständigkeit eines solchen Werkstoffes bei Temperaturen oberhalb 1400 °C, bevorzugt bis 1600 °C zu verstehen, die somit Einsatzmöglichkeiten für aus solchem Werkstoff hergestellte Bauteile eröffnen, die mit herkömmlichen Keramikwerkstoffen, wenn überhaupt, nur über relativ kurze Zeiträume möglich wären.

Beim Einsatz von Bauteilen im Hochtemperaturbereich. müssen diese insbesondere eine sehr gute Temperaturwechselbeständigkeit aufweisen, da sie ständig wechselnden Temperatureinflüssen ausgesetzt sind und trotzdem eine Riß- und insbesondere eine Spannungsrißbildung vermieden werden muß, um die entsprechenden Bauteile ohne Zerstörungen nutzen zu können. Ein weiteres Erfordernis für einen solchen Werkstoff ist eine erhöhte Kriechbeständigkeit, die über entsprechende Gefügestrukturen erreicht wird.

Außerdem sollen solche Werkstoffe aus Festigkeitsgründen und für eine hohe Langzeitstabilität einen entsprechend hohen E-Modul aufweisen und zusätzlich chemisch auch gegenüber den aggressiven Bedingungen während des Hochtemperatureinflusses beständig sein.

Bisher sind silikatgebundene Bauteile, z.B. Rollen bekannt, die im Werkstoffmaterial einen Anteil von z.B. 70 - 80 Masse-% Al₂O₃ aufweisen. So hergestellte Bauteile können im Temperaturbereich bis ca. 1350 °C eingesetzt werden, ohne daß die entsprechenden Bauteile nach kurzer Zeit bereits zerstört bzw. unbrauchbar werden.

Für viele Anwendungen ist jedoch eine höhere Temperaturbeständigkeit für solche Bauteile erforderlich, die jedoch mit solchen Keramikwerkstoffen, wie im Abschnitt vorher beschrieben, nicht erreichbar sind. Die hierfür möglichen nichtoxidischen Keramikwerkstoffe sind jedoch kostenintensiver und schwerer verarbeitbar und können nicht ohne weiteres unter allen beliebigen Bedingungen eingesetzt werden, da sie sich bei entsprechend hohen Temperaturen und dem vorhandensein verschiedener Medien reaktiv verändern können.

Daneben ist aus EP 0 256 182 ein verschleißfester Werkstoff auf der Basis von Al₂O₃ bekannt. Diesem Keramikwerkstoff sollen Sinterhilfsmittel zugegeben werden, die zum einen die erforderliche Sintertemperatur auf einen Bereich unter 1350 °C verringern und die Verschleißfestigkeit eines solchen Werkstoffes verbessern. Die dort genannten Sinterhilfsmittel sind MnO₂, TiO₂, CuO sowie Fe₂O₃ und ZrO₂ und SiO₂, wobei jeweils mehrere dieser genannten Oxids vor dem Sintern zugegeben werden müssen, um den gewünschten Effekt zu erzielen.

Ein so hergestellter Keramikwerkstoff ist infolge seiner Konsistenz und des entsprechenden Herstellungsverfahrens jedoch auf Einsatzbedingungen, die unterhalb der Sintertemperatur und demzufolge auch der entsprechend der Problemstellung der Erfindung geforderten Temperaturen liegen begrenzt.

Darüber hinaus ist in Kubota et al., JOURNAL OF THE CERAMIC SOCIETY OF JAPAN, 102(1), 1994, 94-99 ein keramischer Werkstoff beschrieben. Dieser dort beschriebene keramische Werkstoff beruht auf einem Sinterungsverfahren, bei dem Aluminiumoxid und Zirkondioxid zusammen mit Mullit eingesetzt werden. Hierbei wird das Mullit nach einem Sol-Gel-Verfahren hergestellt, für das als Lösungsmittel Ethanol eingesetzt wird. Das Lösungsmittel wird anschließend an einem Rotationsverdampfer entfernt. Verfahrensbedingt sind bei diesem Verfahren bereits die Ausgangsstoffe verunreinigt, was negative Auswirkungen auf den derart hergestellten keramischen Werkstoff in bezug auf die Reinheit, Rohrbruchfestigkeit, E-Modul hat.

Des weiteren ist in EP 0 005 198 ein Verfahren zur Herstellung eines dichten keramischen Materials mit einem Gehalt an hochreinem Mullit beschrieben. Dieses Verfahren ist dadurch gekennzeichnet, daß man eine Mischung aus
(1) mindestens 3 Gew.-% Mullitteilchen,
(2) Aluminiumoxidteilchen in einer Menge zwischen der für die stöchiometrische Zusammensetzung erforderlichen und einem Überschuß, abzüglich der in dem zuerst zugesetzten Mullit vorhandenen Menge und
(3) Glasteilchen in einer zur Reaktion von Siliziumdioxid mit Aluminiumoxid zu einem gewünschten Mullitgehalt ausreichenden Menge
bei einer Temperatur zwischen 1300 und 1800 °C sintert, so daß Aluminiumoxid und das Siliziumoxid des Glases unter dem Einfluß des zuerst zugesetzten Mullits zu Mullit reagieren.

Der Nachteil dieses Verfahrens ist, daß auch hier nicht sämtliche Ausgangematerialien in einem hochreinen Zustand vorliegen und dies Nachteile in bezug auf das E-Modul und die Temperaturwechselbeständigkeit nach sich zieht.

Ausgehend vom genannten Stand der Technik ist es daher Aufgabe der Erfindung eine Möglichkeit zu Schaffen, um einen oxidischen Keramikwerkstoff bzw. daraus hergestellte Bauteile zur Verfügung zu stellen, die bei sehr hohen Temperaturen einsetzbar sind, eine hohe Temperaturwechselbeständigkeit, einen hohen E-Modul und hohe chemische Beständigkeit aufweisen.

Erfindungsgemäß wird diese Aufgabe mit den Merkmalen des Patentanspruches 1 für den erfindungsgemäßen Keramikwerkstoff, des Patentanspruchs 6 für das Verfahren zur Herstellung eines solchen Keramikwerkstoffes und den Patentanspruch 9 für ein aus einem solchen Werkstoff hergestelltes Bauteil gelöst. Vorteilhafte Ausgestaltungen und Weiterbildungen der Erfindung ergeben sich aus den in den jeweils untergeordneten Ansprüchen genannten Merkmalen.

Die an die erfindungsgemäßen hochtemperaturfesten Keramikwerkstoffes und aus diesen hergestellten Bauteile gestellten Anforderungen werden insbesondere dadurch erfüllt, daß für einen Sinterprozeß hochreine, synthetisch hergestellte Ausgangsmaterialien verwendet werden, wobei unter hochrein zumindest ein Reinheitsgrad von 99 % zu verstehen ist. Es werden also 75 bis 95 Masse-% hochreines Al₂O₃ als Bestandteil A, ebenfalls hochreines SiO₂ mit 25 - 5 Masse-% als Bestandteil B im Werkstoff verwendet, um einen solchen Werkstoff bzw. daraus hergestellte Bauteile zu erhalten, wobei im fertigen Werkstoff 0 - 10 Masse-% ZrO₂ (Bestandteil C) enthalten sein kann.

Dadurch wird es möglich, daß sich beim Sintern bei Temperaturen von mindestens 1700 °C Umwandlungsprozesse im Werkstoff vollziehen, die eine für die gestellten Anforderungen günstige Struktur ausbilden. Es hat sich Es hat sich gezeigt, daß die bis maximal 300 µm großen Aluminiumoxidkristalle in einer feinstkörnigen Matrix, bestehend aus bis maximal 10 µm großen Mullitkristallen und mikrokristallinen Ausscheidungen von monoklinen ZrO₂-Kristallen eingebettet sind. Die ZrO₂-Kristalle haben eine Größe < 2 µm. Besonders hervorzuheben beim anmeldungsgemäßen Hochtemperaturwerkstoff ist, daß dieser gering - und mikroporös ist und eine Wasseraufnahmefähigkeit von 2 - 7 % hat, wobei die maximale Porengröße 100 µm nicht überschreitet. Der Werkstoff besitzt einen statischen E-Modul von 50 - 150 GPa.

Die Verwendung hochreiner Rohstoffe führt dazu, daß nur ein geringer Gehalt an Spurenelementen im Werkstoff vorhanden ist, der Glasphase bilden kann. Ein geringer Spurenelementgehalt verbessert demzufolge die Kriechfestigkeit erheblich. Die Ausbildung einer gezielten Mikroporosität verbessert die Temperaturwechselbeständigkeit des Werkstoffes erheblich. Zudem sorgt ein hoher E-Modul für geringe Durchbiegungen im Bauteil und verhindert so die bei extremen Temperaturbedingungen gefürchtete Rißbildung.

In bezug auf die Ausgangskomponenten Al₂O₃ und SiO₂ ist es vorteilhaft, diese in 75 - 95 Masse-%-Anteilen für Al₂O₃ und 5 - 25 Masse-%-Anteilen von SiO₂ einzusetzen. Für spezifische Anwendungen kann der hochtemperaturfeste, hochbelastbare feinkeramische Werkstoff unter Verwendung von 0,5 - 10 Masse-% ZrO₂, hergestellt werden. Es handelt sich nicht um fertiges, als Ausgangsmaterial zugegebenes ZrO₂, sondern um reaktiv gebildetes ZrO₂, wobei die Bildung während des Sinterns aus zugegebenen Zirkonsilikat erreicht wird. Dadurch kann im erfindungsgemäßen hochtemperaturfesten Konstruktionswerkstoff die damit verbundene Verringerung der Vernetzbarkeit gegen silikatische Gläser und Schlacken ausgenutzt werden.

Die Bauteile aus dem erfindungsgemäßen hochtemperaturfesten Keramikwerkstoff werden dabei so hergestellt, daß die Ausgangsmaterialien auf herkömmliche Art und Weise mit einem bekannten organischen Bindemittel geformt, der Formling getrocknet und so ein Grünkörper hergestellt wird, der anschließend bei Temperaturen oberhalb 1700 °C gesintert wird. Beim Sintern stellt sich dann die bereits genannte Gefügestruktur des fertigen Werkstoffes in situ ein.

Das Sintern kann ohne weiteres in einer Oxidierenden Atmosphäre, z.B. in Luft erfolgen, wobei als Närmequelle herkömmliche gasbeheizte Öfen verwendet werden können.

Neben rollenförmigen Bauteilen können auch geometrische Formen, wie z.B. Balken, Platten, Tiegel, Stützen und Bauteile fast beliebiger Geometrie entsprechend hergestellt werden.

Nachfolgend soll die Erfindung an Beispielen näher erläutert werden.

### Beispiel 1

Zur Herstellung von zirkonoxidhaltigen Ofenrollen werden 9,1 kg einer calcinierten Tonerde (Al₂O₃-Gehalt 99, 8 %), 10, 2 kg einer Tabular Tonerde (Al₂O₃₋ Gehalt 99,6 %, Körnung 0 - 300 µm), 4,8 kg eines Schmelzmullits und 3,6 kg eines Zirkonsilikatmehls in einem doppelschaufeligen Knetmischer gemeinsam mit 3,0 kg demineralisiertem Wasser, 3,6 kg kolloidaler Kieselsäure und 1,5 kg organischen Binde- und Plastifizierungsmitteln geknetet, bis eine strangpreßfähige Masse entsteht.

Aus der Masse werden mit einer Strangpresse Rohre mit 30 mm Außen- und 20 mm Innendurchmesser mit einer Länge von 3200 mm gepreßt. Nach dem Trocknen werden die Rohre in einem gasbeheizten Ofen bei 1700 °C mit einer Haltezeit von 5 Stunden gebrannt.

Die so erhaltenen Rollen weisen eine 3-Punkt-Biegefestigkeit von 71 MPa und einen statisch gemessenen E-Modul von 76 GPa auf . Die Wasseraufnahmefähigkeit beträgt 5,8 %.

### Beispiel 2

zur Gießfertigung von erfindungsgemäßen Bauteilen werden hochreiner, synthetischer Schmelzmullit mit demineralisiertem Wasser zu einer wäßrigen Suspension aufbereitet und anschließend naß in einer Rührwerkskugelmühle aufgemahlen. Nach Erreichung einer vorgegebenen Kornfeinheit mit einem d₅₀-Wert ≤ 1,8 µm wird der Schlicker über einen Sprühturm versprüht. Das so erhaltene Sprühgranulat kann anschließend sofort weiterverarbeitet werden, indem je nach Einsatzzweck ca. 20 - 30 % Sprühgranulat mit 70 - 80 % Schmelzkorund gemischt werden. Es empfiehlt sich dabei, den Schmelzkorund in verschiedenen Körnungen bis hin zu maximal 300 µm abzustufen. Je feiner der Schmelzkorund ist, um so höher wird die mechanische Festigkeit des gesinterten fertigen Bauteils. Bei gröberem Schmelzkorund ist die Endfestigkeit, der E-Modul und die Sinterdichte zwar kleiner, dafür kann eine erhöhte Temperaturwechselbeständigkeit erreicht werden.

Die Kornfeinheit der Rohstoffe hängt deshalb stark von den jeweils anwendungsspezifisch geforderten Eigenschaften ab und kann entsprechend berücksichtigt werden.

Da die beiden Hauptrohstoffe Korund und Mullit für eine Gießfertigkeit dem Grünling allein keine ausreichende Rohrbruchfestigkeit verleihen, ist die Zugabe eines organischen Bindemittels erforderlich. Hierbei eignet sich für Korund und Mullit besonders ein Vinylacetat Polymer. So genügt in diesem Fall die Zugabe von 1 - 2 Masse-% Vinnapas EZ 36 (Polyvinylacetat von Wacker).

Der Korund - Mullit - Schlicker, bestehend aus Schmelzkorund, Schmelzmullit, demineralisiertem Wasser, Verflüssiger ET 64 (Zschimmer & Schwarz) und Vinnapas EZ 36 wird nach ausreichender Quirlzeit mit einem Quirl in Gipsformen gegossen. Die Verweilzeit des Schlickers in der Gipsform hängt von der Wandstärke des Formlings und der Geometrie des Bauteils und davon ab, ob ein Hohl- oder Vollkörper herqestellt werden soll.

Nach diesem Verfahren können sowohl Platten, Tiegel oder auch Rohre gegossen werden.

Nach Trocknung werden die Bauteile wieder bei einer Temperatur von ca. 1700 °C gesintert.

### Beispiel 3

Hochreiner synthetisch hergestellter Schmelzmullit wird, wie bei Beispiel 2 beschrieben, gemahlen und sprühgetrocknet. Die anschließende Schlickeraufbereitung wird ebenfalls so durchgeführt, wobei jedoch an Stelle des Vinylacetat Polymers 2 - 4 Masse-% eines PVA 04/140 (Polyvinylalkohol von Wacker), in Abhängigkeit der Körnung des Schmelzkorundes werden. Es wird der gleiche Verflüssiger ET 64 verwendet.

Der Schlicker wird auf einem Sprühturm sprühgetrocknet. das Sprühgranulat kann mit einer Restfeuchte von ca. 0,2 % in Gummischläuchen abgefüllt, isostatisch mit einem Druck von 1400 bar gepreßt werden.

Die erhaltenen Formkörper können mechanisch, z.B. mittels Drehen, Sägen, Bohren oder Fräsen auf herkömmlichen Metallbearbeitungsmaschinen bearbeitet werden, bevor sie bei einer Temperatur von 1700 °C gebrannt werden.

## Patentansprüche

1. Hochtemperaturfester, hochbelastbarer, feinkeramischer, gesinterter Konstruktionswerkstoff, der hochreine, synthetisch erzeugte Ausgangsstoffe mit einem Anteil von 75-95 Masse-% Al₂O₃ (A) und 25 - 5 Masse-% SiO₂ (B) umfaßt,
**dadurch gekennzeichnet**
**daß** die Ausgangsstoffe einen Reinheitsgrad > 99 % besitzen.

2. Werkstoff nach Anspruch 1, **dadurch gekennzeichnet, daß** dem Werkstoff Zirkonsilicat zugesetzt worden ist, in so einer Menge, daß im Werkstoff bis 10 Masse-% ZrO₂ enthalten sind.

3. Werkstoff nach Anspruch 1 oder 2, **dadurch gekennzeichnet, daß** bis maximal 300 µm große Al₂O₃-Kristalle in einer feinstkörnigen Matrix, bestehend aus maximal 10 µm großen Mullitkristallen und mikrokristallinen Ausscheidungen von monoklinen ZrO₂-Kristallen < 2 µm, eingebettet sind.

4. Werkstoff nach einem der Ansprüche 1 bis 3, **dadurch gekennzeichnet, daß** ein mikroporöser Werkstoff mit Wasseraufnahmefähigkeiten von 2 - 7 % vorliegt, wobei die maximale Porengröße 100 µm nicht überschreitet.

5. Werkstoff nach einem der Ansprüche 1 bis 4, **dadurch gekennzeichnet, daß** er einen statischen E-Modul von 50 - 150 GPa aufweist.

6. Verfahren zur Herstellung eines hochtemperaturfesten, hochbelastbaren feinkeramischen Konstruktionswerkstoffes nach einem der Ansprüche 1 bis 5, **dadurch gekennzeichnet, daß** als hochreine, synthetische Rohstoffe feinstteilige, calcinierte Bayertonerde (Al₂O₃ > 99,8 %) und/oder Tabulartonerde(Al₂O₃ > 99,6 %) und Schmelzmullit (SiO₂ + Al₂O₃ > 99,7 %) und/oder kolloidale Kieselsäure als weiterer SiO₂-Träger (SiO₂ > 99,9 %) und gegebenfalls feinstes Zirkonsilikat (ZrO₂+HfO₂+SiO₂ > 99 %) unter Zusatz eines organischen Bindemittels eingesetzt wird.

7. Verfahren nach Anspruch 6, **dadurch gekennzeichnet, daß** feinstteiliges ZrO₂ in situ beim Sintern in der mullitischen Matrix gebildet wird.

8. Verfahren nach Anspruch 6 oder 7, **dadurch gekennzeichnet, daß** der Formgebungsprozeß unter Verwendung organischer Bindemittel und der Sinterprozeß bei Temperaturen von mind. 1700 °C durchgeführt werden.

9. Bauteil aus einem feinkeramischen Konstruktionswerkstoff das als tragendes und/oder förderndes Bauteil bei Hochtemperaturprozessen bei Anwendungstemperaturen bis 1600 °C, auch in oxidierender neutraler und reduzierender Ofenatmosphäre Anwendung findet, **dadurch gekennzeichnet, daß** der feinkeramische Konstruktionswerkstoff ein Werkstoff ist, der hergestellt worden ist nach mindestens einem der Ansprüche 1 bis 5.

10. Bauteil nach Anspruch 9, **dadurch gekennzeichnet, daß** der feinkeramische Konstruktionswerkstoff zusätzlich reaktiv gebildetes ZrO₂ enthält.

## Claims

1. A high-temperature resistant, highly loadable, fine ceramic, sintered building material comprising highly pure, synthetically produced starting materials which contain 75-95 wt.% Al₂O₃ (A) and 25-5 wt.% SiO₂ (B), **characterised in that** the starting materials have a degree of purity >99%.

2. A material according to claim 1, **characterised in that** zircon silicate is added to the material in an amount such that the material contains up to 10 wt.% ZrO₂.

3. A material according to claim 1 or 2, **characterised in that** Al₂O₃ crystals, up to a maximum of 300µm in size, are embedded in a fine-grained matrix comprising mullite crystals no bigger than 10µm in size and microcrystalline deposits of monoclinic ZrO₂ crystals <2µm.

4. A material according to any one of claims 1 to 3, **characterised in that** it is a microporous material with water absorption capacities of 2-7%, the maximum pore size not exceeding 100µm.

5. A material according to any one of claims 1 to 4, **characterised in that** it has a static modulus of elasticity of 50-150 GPa.

6. A method of producing a high-temperature resistant, highly loadable, fine ceramic building material according to any one of claims 1 to 5, **characterised in that** finely divided, calcined Bayer alumina (Al₂O₃ >99.8%) and/or tabular alumina (Al₂O₃ >99.6%) and sintered mullite (SiO₂ + Al₂O₃ >99.7%) and/or colloidal silicic acid as a further SiO₂ carrier (SiO₂ >99.9%) and optionally very fine zircon silicate (ZrO₂ + HfO₂ + SiO₂ >99%) are used as highly pure, synthetic raw materials, with the addition of an organic binder.

7. A method according to claim 6, **characterised in that** finely divided ZrO₂ is formed in situ in the mullite matrix during sintering.

8. A method according to claim 6 or 7, **characterised in that** the shaping process is carried out using organic binders and the sintering process is carried out at temperatures of at least 1700°C.

9. A component comprising a fine ceramic building material and used as a supporting and/or promoting component in high-temperature processes at application temperatures up to 1600°C, also in oxidising, neutral and reducing furnace atmospheres, **characterised in that** the fine ceramic building material is a material produced according to at least one of claims 1 to 5.

10. A component according to claim 9, **characterised in that** the fine ceramic building material additionally contains reactively formed ZrO₂.

## Revendications

1. Matériau de construction en céramique fine frittée, résistant aux températures élevées, pouvant supporter des contraintes importantes, qui contient des produits de dêpart de grande pureté préparés par synthèse, avec une proportion de 75 à 95 % en poids d'Al₂O₃ (A), et une proportion de 25 à 5 % en poids de SiO₂ (B),
**caractérisé en ce que**
les produits de départ possèdent un degré de pureté > 99 %.

2. Matériau selon la revendication 1, **caractérisé en ce qu'**on a ajouté au matériau du silicate de zircon dans une quantité telle que jusqu'à 10 % en poids de ZrO₂ sont présents dans le matériau.

3. Matériau selon la revendication 1 ou 2, **caractérisé en ce que** des cristaux d'Al₂O₃ d'une taille pouvant atteindre un maximum de 300 µm sont noyés dans une matrice à grains très fins constituée de cristaux de mullite d'une taille maximale de 10 µm et de dépôts microcristallins de cristaux monocliniques de ZrO₂ < 2 µm.

4. Matériau selon l'une des revendications 1 à 3, **caractérisé en ce qu'**il s'agit d'un matériau microporeux, ayant une capacité d'absorption de l'eau de 2 à 7 %, dans lequel une taille maximale des pores de 100 µm n'est pas dépassée.

5. Matériau selon l'une des revendications 1 à 4, caractêrisê en ce qu'il possède un module d'élasticité statique de 50 à 150 GPa.

6. Procédé de fabrication d'un matériau de construction en céramique fine, résistant aux températures élevées et pouvant supporter des contraintes importantes selon l'une des revendications 1 à 5, **caractérisé en ce que**, à titre de matières premières synthétiques de grande pureté, on utilise de l'alumine Bayer calcinée finement divisée (Al₂O₃ > 99,8 %) et/ou de l'alumine Tabular (Al₂O₃ > 99,6 %) et de la mullite fondue (SiO₂ + Al₂O₃ > 99,7 %) et/ou de l'acide silicique colloïdal comme autre matériau à base de SiO₂ (SiO₂ > 99,9 %), et le cas échéant dû silicate de zircon très fin (ZrO₂ + HfO₂ + SiO₂ > 99 %), avec ajout d'un liant organique.

7. Procédé selon la revendication 6, **caractérisé en ce que** le ZrO₂ finement divisé est formé in situ lors du frittage dans la matrice mullitique.

8. Procédé selon la revendication 6 ou 7, **caractérisé en ce que** le procédé de façonnage est réalisé en utilisant un liant organique et le procédé de frittage est réalisé à une température minimale de 1 700 °C.

9. Elément de construction constitué d'un matériau de construction en céramique fine, qui se prête à des applications comme élément de construction porteur et/ou convoyeur pour des procédés haute température impliquant l'utilisation de températures allant jusqu'à 1 600 °C, y compris dans des fours ayant une atmosphère oxydante, neutre et réductrice, **caractérisé en ce que** le matériau de construction en céramique fine est un matériau qui a été fabriqué selon au moins d'une des revendications 1 à 5.

10. Elément de construction selon la revendication 9, **caractérisé en ce que** le matériau de construction en céramique fine contient en outre du ZrO₂ formé par réaction.
